# FASCICULE DE BREVET EUROPEEN

(11) **EP 1 551 649 B1**
(45) Date de publication et mention de la délivrance du brevet: **24.02.2016**
(21) Numéro de dépôt: 03763758.4
(22) Date de dépôt: 09.07.2003
(51) Int. Cl.: B60C 9/22, B60C 9/18

(54) **PNEUMATIQUE POUR VEHICULES LOURDS**
REIFEN FÜR SCHWERFAHRZEUGE
TYRE FOR HEAVY VEHICLES

(30) Priorité: 15.07.2002 FR 0208929
(43) Date de publication de la demande: 13.07.2005
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: FERLIN, Olivier, F-63200 Malauzat (FR)
(74) Mandataire: Le Cam, Stéphane Georges Elie
(86) Numéro de dépôt international: PCT/EP2003/007366
(87) Numéro de publication internationale: WO 2004/007220

(56) Documents cités:
- EP-A- 0 388 178
- WO-A-01/90478
- WO-A-99/06227
- WO-A-99/24270
- WO-A1-91/14573
- FR-A- 2 744 954
- PATENT ABSTRACTS OF JAPAN vol. 018, no. 543 (M-1687), 17 octobre 1994 (1994-10-17) & JP 06 191219 A (BRIDGESTONE CORP), 12 juillet 1994 (1994-07-12)

## Description

L'invention concerne un pneumatique à armature de carcasse radiale ancrée dans chaque bourrelet à au moins une tringle, et comprenant une armature de sommet constituée par au moins deux nappes dites de travail, radialement superposées et formées d'éléments de renforcement parallèles entre eux dans chaque nappe et croisés d'une nappe à la suivante en faisant avec la direction circonférentielle du pneumatique des angles dont la valeur peut être comprise entre 10 et 35° en valeur absolue.

Dans de nombreux cas, la demanderesse a trouvé que plusieurs critères de qualité du pneumatique considéré, en particulier pour utilisation sur véhicules lourds, peuvent être améliorés par la présence dans l'armature de sommet, radialement entre les dites nappes de sommet de travail, d'une nappe additionnelle formée d'éléments métalliques orientés sensiblement parallèlement à la direction circonférentielle.

On peut citer la demande FR 2 744 954 qui, en vue d'abaisser la température de fonctionnement d'un pneumatique 'Poids lourds' au moyen d'une solution économique et efficace, préconise d'utiliser une nappe additionnelle d'éléments de renforcement circonférentiels ayant une largeur axiale au moins égale à 1,05 fois la largeur de la nappe de travail la plus large, les éléments de renforcement de ladite nappe additionnelle ayant un diamètre plus grand que le diamètre des éléments des nappes de travail.

Dans le cadre ci-dessus, la nappe additionnelle peut être formée de câbles en acier continus dits semi-élastiques, c'est-à-dire des câbles présentant des allongements relatifs à la rupture supérieurs à 2%. Ces câbles permettent d'obtenir le niveau de rigidité apte à une répartition harmonieuse de la tension circonférentielle entre les nappes de sommet de travail et la nappe additionnelle. Lesdits câbles sont avantageusement dits "bi-module", c'est-à-dire présentant une courbe, représentant la contrainte de traction en fonction de l'allongement relatif, ayant des faibles pentes pour les faibles allongements et une pente sensiblement constante et forte pour les allongements supérieurs. Le module avant cuisson très faible, pour des allongements inférieurs à 2%, permet une augmentation du développement circonférentiel de la nappe additionnelle pendant la cuisson du pneumatique.

La nappe additionnelle peut aussi être formée de câbles métalliques en acier orientés circonférentiellement et coupés de manière à former des tronçons de longueur très inférieure à la longueur circonférentielle de la nappe, les coupures entre tronçons étant axialement décalées les unes par rapport aux autres. Un tel mode de réalisation permet de conférer, de manière simple, à la nappe additionnelle la rigidité désirée, quelle qu'elle soit.

Le choix des câbles élastiques ou coupés pour le renforcement de la nappe additionnelle ne permet pas la meilleure résistance à la fatigue de ladite nappe, soit en conséquence d'une diminution de la force de rupture des câbles élastiques, soit en conséquence de l'existence de concentrations de contrainte dans le mélange de calandrage des câbles coupés.

La demande internationale WO 99/24 270 enseigne qu'une meilleure résistance à la séparation entre nappe de carcasse et l'armature de sommet, entre nappes de sommet et résistance à la fatigue des éléments de renforcement circonférentiels de la nappe additionnelle peuvent être obtenues grâce à l'emploi en tant qu'éléments de renforcement de la nappe additionnelle d'éléments métalliques continus circonférentiellement et ondulés dans le plan de la nappe, les ondulations des dits éléments étant parallèles entre elles, en phase et orientées circonférentiellement telles que le rapport a/λ de l'amplitude a sur la longueur d'onde λ décroisse en allant axialement du centre aux bords de ladite nappe pour être minimal aux dits bords.

De la lecture des deux documents cités ci-dessus, il ressort que les éléments de renforcement de ladite nappe additionnelle sont préférentiellement des câbles métalliques en acier de plus gros diamètre que celui des éléments de renforcement des deux nappes de travail radialement adjacentes. Alors que la structure décrite dans le premier document cité (utilisation d'éléments de renforcement semi-élastiques ou éléments coupés) pénalise la résistance à la traction et l'endurance de la nappe additionnelle elle-même, la structure décrite dans le deuxième document cité (éléments de renforcement ondulés) est difficile à mettre en oeuvre et en particulier augmente sensiblement les coûts de fabrication, ladite nappe additionnelle étant obtenue par enroulement hélicoïdal de l'élément de renforcement autour d'une forme jusqu'à obtention de la largeur totale de la nappe.

Le document EP-A-0388178, possédant les caractéristiques du préambule de la revendication 1, décrit encore un pneumatique comportant au moins une nappe d'éléments de renforcement circonférentiels et présentant une ondulation, lesdits éléments de renforcement étant soit des fils unitaires soit des câbles de type toron.

Les documents WO-A-01/90478 et WO-A-91/14573 décrivent des éléments de renforcement de type toron en acier SHT.

L'invention a pour but de remédier aux inconvénients ci-dessus, et préconise une solution qui permette une meilleure résistance aux séparations et endurance que celles obtenues avec des éléments de renforcement tronçonnés utilisés précédemment, tout en évitant les problèmes de fabrication et minimisant les coûts relatifs à l'utilisation de gros câbles ondulés.

Ce but est atteint avec un pneumatique selon la revendication 1. Le pneumatique, conforme à l'invention, comprenant une armature de carcasse radiale surmontée radialement d'une armature de sommet composée d'au moins deux nappes de sommet de travail formées d'éléments de renforcement métalliques croisés d'une nappe à la suivante en faisant avec la direction circonférentielle des angles compris entre 10 et 35°, et d'au moins une armature additionnelle, formée d'éléments de renforcement métalliques orientés circonférentiellement, ladite armature additionnelle étant formée d'au moins deux couches d'éléments métalliques de diamètre compacté au plus égal à 0.6 mm.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

L'armature additionnelle peut être formée d'au moins deux nappes d'éléments de petit diamètre, chaque nappe ayant deux bords se recouvrant circonférentiellement. Elle peut encore être réalisée par enroulement d'une seule nappe pour former au moins deux couches, l'armature n'ayant plus que deux bords libres, au commencement et à la fin de l'enroulement. Les bords libres constituent des points, ou zones, singuliers qui, selon l'invention, n'entraînent pas une usure irrégulière du pneumatique du fait du diamètre des éléments de renforcement.

Des couches de mélange caoutchouteux sont avantageusement prévues radialement à l'intérieur et/ou à l'extérieur des extrémités des couches d'éléments de renforcement de petit diamètre de l'armature additionnelle selon la largeur axiale desdites couches d'éléments de renforcement. Ces couches de mélanges caoutchouteux permettent de découpler lesdites extrémités des nappes radialement à leur contact.

La réalisation de l'armature additionnelle à partir d'une ou plusieurs nappes présentant la largeur de l'armature à réaliser présente l'avantage en terme de procédé de mettre en place ladite armature en quelques tours. D'un point de vue productivité et donc économique il apparaît que le pneumatique selon l'invention est plus simple de mise en oeuvre et plus rapide à réaliser que les pneumatiques faisant intervenir la mise en place d'un fil ou de bandelettes par un enroulement hélicoïdal. En outre, le pneumatique selon l'invention présente une mise en place des éléments de renforcement de l'armature circonférentielle selon un angle précisément nul par rapport à la direction circonférentielle et non pas selon un angle faible mais légèrement supérieur à 0°.

Les éléments de renforcement selon l'invention sont des assemblages en acier SHT (Super High Tensile) du type 1 x n, n étant compris entre 2 et 5, et le diamètre des fils étant compris entre 12/100 et 30/100 mm et de préférence supérieur à 15/100 mm. Les éléments de renforcement sont donc des torons combinant n fils élémentaires dont les caractéristiques sont celles qui viennent d'être énoncées.

Comme toute armature d'éléments circonférentiels, et afin de pouvoir fabriquer le pneumatique considéré de la manière la plus simple possible et à un coût le plus faible possible, l'armature, conforme à l'invention, doit présenter pour les faibles forces de traction imprimée parallèlement à la direction des éléments de renforcement un certain allongement relatif, nécessaire à la possibilité d'avoir un développement circonférentiel de l'armature de sommet plus important lors des opérations de confection, finition et vulcanisation du pneumatique.

Dans le contexte ci-dessus, selon une première variante de réalisation de l'invention, l'armature additionnelle est formée de couches ou nappes d'éléments de renforcement fractionnés, c'est-à-dire coupés de manière à former des tronçons ou ensembles de tronçons de longueur(s) inférieure(s) à la longueur circonférentielle d'une nappe ou couche, les coupures entre tronçons ou ensembles de tronçons étant décalées circonférentiellement les uns par rapport aux autres.

Selon une réalisation avantageuse de cette variante de l'invention, les renforts sont fractionnés en 3 à 12 fractions au tour.

Selon cette variante de réalisation de l'invention, le positionnement des éléments de renforcement s'effectuant selon deux dimensions, la première étant la direction axiale et la seconde la direction radiale, les zones où les éléments de renforcement sont absents sont mieux réparties que dans le cas de bandes ou de fils se répartissant sur une seule couche. Plus précisément, moins de zones sans élément de renfort sont présentes sur une même ligne axiale ou méridienne du pneumatique.

Selon une seconde variante de réalisation de l'invention, la longueur sur un tour des éléments de renforcement de l'armature additionnelle est, dans le plan de chaque couche, supérieure de 0 à 3% à la longueur de pose desdits éléments. En d'autres termes, l'allongement résiduel sur le pneumatique est inférieur à 3%, l'allongement résiduel étant le rapport entre la différence entre la longueur des éléments de renforcement par tour et le développement de pose, ou longueur d'un tour, sur ledit développement de pose. Cette différence entre la longueur des éléments de renforcement et la longueur de pose est avantageusement répartie de manière périodique et uniforme sur un tour. La longueur sur un tour des éléments de renforcement de l'armature additionnelle est, dans le plan de chaque couche de préférence supérieure de 0 à 2% de la longueur de pose desdits éléments et de préférence encore supérieure de 1 à 1,4%.

Selon cette seconde variante, l'armature additionnelle est avantageusement formée d'éléments ondulés dans le plan de chaque nappe ou couche, en disposant les éléments selon une sinusoïde définie dont la longueur d'onde est comprise entre 20 et 100 mm.

Selon cette seconde variante de réalisation de l'invention, la nappe additionnelle est avantageusement réalisée avec des éléments de renfort disposés de manière longitudinale et c'est la nappe elle-même qui est mise en place avec une ondulation telle que présentée précédemment. Une telle ondulation peut être réalisée par tous moyens connus de l'homme du métier.

Selon une autre variante de réalisation de l'invention, l'armature additionnelle est formée de couches d'éléments de renforcement métalliques présentant une courbe contrainte de traction en fonction de l'allongement relatif ayant des faibles pentes pour les faibles allongements et une pente sensiblement constante et forte pour les allongements supérieurs.

Selon une réalisation avantageuse de l'invention, l'armature additionnelle est positionnée entre les deux nappes de sommet de travail.

Conformément à cette réalisation, l'armature additionnelle présente une épaisseur inférieure à 2.4 mm. Au-delà de cette valeur, la mise en compression ou en extension des éléments de renforcement lors du roulage conduisent à des risques de dégradation.

Selon une autre réalisation de l'invention, l'armature additionnelle est positionnée au-dessus des nappes de sommet de travail. Selon ce type de réalisation, la nappe additionnelle peut se substituer à la présence d'une nappe de protection. En effet, les propriétés de la nappe additionnelle et plus particulièrement le diamètre de ses éléments de renforcement autorisent une pénétrabilité de la gomme ou masse caoutchouteuse entre les câbles formant les éléments de renforcement telle que la nappe additionnelle présente une protection notamment contre la corrosion suffisante qui peut dispenser de la présence d'une nappe de protection si celle-ci est requise notamment pour cette propriété.

D'autres détails et caractéristiques avantageux de l'invention ressortiront ci-après de la description d'exemples de réalisation en référence aux figures 1 à 3 qui représentent :
- figure 1, une vue en section méridienne d'un schéma d'une armature de sommet conforme à l'invention,
- figure 2, une vue en plan et écorché d'une armature,
- figure 3, une vue de profil de l'armature additionnelle.

Les figures ne sont pas représentées à l'échelle pour en simplifier la compréhension.

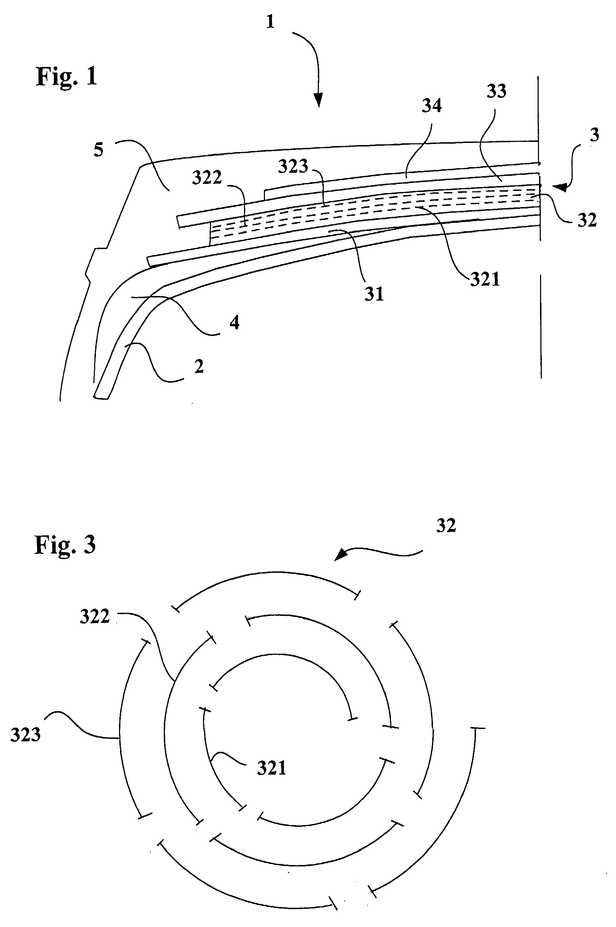

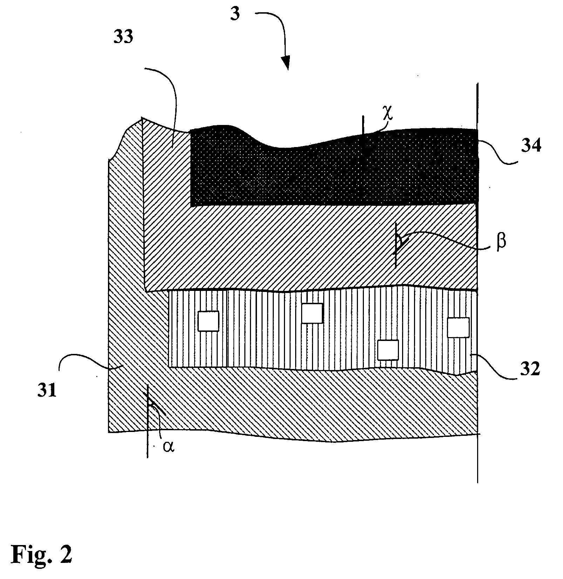

Le pneumatique 1, de dimension 315 70 R22.5 X, comprend une armature de carcasse radiale, formée d'une seule nappe 2 de câbles métalliques inextensibles, ancrée dans chaque bourrelet à au moins une tringle en formant par enroulement autour de ladite tringle un retournement (non montrés). Ladite armature de carcasse 2 est radialement surmontée d'une armature de sommet 3, elle-même surmontée d'une bande de roulement 5. L'armature de sommet 3 est composée radialement de l'intérieur à l'extérieur :
- d'une première nappe de sommet de travail 31 formée de câbles métalliques 27x23 frettés, en acier et inextensibles (sont dits inextensibles des câbles présentant sous une force égale à 10% de leur force de rupture un allongement relatif au plus égal à 2%), les dits câbles ayant un diamètre de 1,3 mm, parallèles entre eux dans la nappe et disposés avec un pas de 2,5 mm (mesuré perpendiculairement aux dits câbles). Lesdits câbles sont orientés par rapport à la direction circonférentielle avec un angle α (fig.2), compris entre 10° et 35° et dans le cas décrit égal à 18° Ladite première nappe 31 est radialement séparée sur ses bords de l'armature de carcasse 1 sous jacente par des profilés 4 de mélange caoutchouteux de forme sensiblement triangulaire, ce qui autorise un profil méridien de ladite nappe 31 de courbure pratiquement nulle ;
- d'une armature additionnelle 32, surmontant radialement la première nappe de travail 31 et formée de trois couches 321, 322, 323 obtenues par enroulement autour de la nappe de travail 31 d'une nappe 32 constituée d'ensembles de cinq tronçons de câbles métalliques en acier SHT 3 x 18 non frettés, inextensibles et circonférentiels (sont dits circonférentiels des câbles faisant avec la direction circonférentielle un angle compris dans l'intervalle 0° ± 2,5°), de diamètre compacté égal à 0,4 mm et séparés les uns des autres d'un pas égal à 0.7 mm. Les coupures ont une longueur nettement et volontairement exagérée sur la figure 3 pour bien montrer les dites coupures pour les trois tours d'enroulement ;
- l'armature additionnelle 32 étant recouverte de la deuxième nappe de sommet de travail 33 formée de câbles métalliques 27x23 frettés identiques à ceux de la première nappe 31, disposés avec le même pas et faisant avec la direction circonférentielle un angle β, opposé à l'angle α des câbles de la première nappe, et dans le cas décrit égal audit angle α (mais pouvant être différent dudit angle α) ;
- l'armature de sommet 3 étant complétée par une nappe 34 de câbles métalliques en acier E23 dits élastiques, orientés par rapport à la direction circonférentielle d'un angle χ de même sens que l'angle β et égal audit angle β (mais pouvant être différent), ladite nappe 34 étant une nappe dite de protection, et des câbles élastiques étant des câbles ayant à la rupture un allongement relatif supérieur à 4%.

Une telle structure est facile à réaliser du fait de l'utilisation de câbles de faibles diamètres : nappe confectionnée par calandrage de n câbles parallèles, facile à couper, facile à enrouler, et en outre, du fait de la meilleure imprégnation des câbles par la gomme de calandrage, l'apparition de fissures de caoutchouc, aux extrémités de câbles à l'endroit des coupures entre tronçons, sous l'effet des contraintes subies, est retardée, sans que leur propagation soit plus rapide, d'où un gain significatif en kilomètres parcourus.

D'excellents résultats peuvent aussi être obtenus par le remplacement des trois couches d'ensembles de tronçons par trois couches de câbles ondulés dans le plan de chaque couche. Les dits câbles présentent, par exemple, au centre de chaque couche de l'armature additionnelle des ondulations correspondant à un allongement résiduel de 0,5% et une longueur d'onde λ, égale à 30 mm. De la même manière qu'il est possible de faire varier axialement la rigidité linéique d'extension d'une couche à tronçons de câbles, en agissant sur le nombre de coupures ou sur la longueur des tronçons, il est possible d'induire une variation de rigidité linéique par la diminution de l'amplitude a des ondulations : il est préférable que l'amplitude a soit plus faible aux bords des couches d'enroulement qu'aux centres des dites couches.

Les résultats obtenus selon l'invention montrent que le pneumatique présente des propriétés notamment en termes d'endurance tout à fait comparable aux meilleurs produits présentés précédemment avec des coûts de fabrication nettement réduits. En effet, l'utilisation de renforts de faibles diamètres, et ainsi de la réalisation d'une nappe additionnelle circonférentielle constituée par enroulement d'une seule nappe ou superposition de deux nappes ou plus, autorise d'une part une fabrication simplifiée et à moindres coûts et d'autre part améliore les propriétés d'endurance des pneumatiques par rapport aux techniques décrites précédemment.

## Revendications

1. Pneumatique P comprenant une armature de carcasse radiale (1) surmontée radialement d'une armature de sommet (3) composée d'au moins deux nappes de sommet de travail (31, 33) formées d'éléments de renforcement métalliques, croisés d'une nappe (31) à la suivante (33) en faisant avec la direction circonférentielle des angles compris entre 10 et 35°, et d'au moins une armature additionnelle (32) formée d'éléments de renforcement métalliques orientés circonférentiellement, **caractérisé en ce que** l'armature additionnelle (32) est formée d'au moins deux couches (321, 322, 323) d'éléments métalliques de diamètre compacté au plus égal à 0.6 mm et **en ce que** les éléments métalliques sont des assemblages en acier SHT du type 1 x n, n étant compris entre 2 et 5, et le diamètre des fils étant compris entre 12/100 et 30/100 mm.

2. Pneumatique selon la revendication 1, **caractérisé en ce que** l'armature additionnelle (32) est réalisée par enroulement d'une seule nappe pour former au moins deux couches d'éléments métalliques.

3. Pneumatique selon la revendication 1 ou 2, **caractérisé en ce que** l'armature de sommet comprend des couches de mélange caoutchouteux radialement à l'intérieur et/ou à l'extérieur des extrémités des couches d'éléments de renforcement de l'armature additionnelle selon la largeur axiale desdites couches d'éléments de renforcement.

4. Pneumatique selon l'une des revendications 1 à 3, **caractérisé en ce que** l'armature additionnelle (32) est formée de couches d'éléments de renforcement métalliques fractionnés, les tronçons ou ensembles de tronçons étant de longueur(s) inférieure(s) à la longueur circonférentielle d'une couche, et **en ce que** les coupures entre tronçons ou ensembles de tronçons sont décalées circonférentiellement et axialement les unes par rapport aux autres.

5. Pneumatique selon l'une des revendications 1 à 3, **caractérisé en ce que** la longueur sur un tour des éléments de renforcement de l'armature additionnelle (32) est, dans le plan de chaque couche, supérieure de 0 à 3% à la longueur de pose desdits éléments, de préférence supérieur de 0 à 2% et de préférence encore supérieur de 1 à 1,4%.

6. Pneumatique selon la revendication 5, **caractérisé en ce que** les éléments de renforcement de l'armature additionnelle (32) sont ondulés dans le plan de chaque couche, la longueur d'onde des ondulations étant comprise entre 20 mm et 100 mm.

7. Pneumatique selon l'une des revendications 1 à 3, **caractérisé en ce que** l'armature additionnelle (32) est formée de couches d'éléments de renforcement métalliques présentant une courbe contrainte de traction en fonction de l'allongement relatif ayant des faibles pentes pour les faibles allongements et une pente sensiblement constante et forte pour les allongements supérieurs.

8. Pneumatique selon l'une des revendications précédentes, **caractérisé en ce que** l'armature additionnelle (32) est positionnée radialement entre les deux nappes de travail (31) et (33).

9. Pneumatique selon la revendication 8, **caractérisé en ce que** l'armature (32) présente une épaisseur inférieure à 2.4 mm.

10. Pneumatique selon l'une des revendications 1 à 7, **caractérisé en ce que** l'armature additionnelle (32) est positionnée radialement au-dessus de la nappes de travail (33) radialement la plus extérieure.

## Patentansprüche

1. Reifen P, der eine radiale Karkassenbewehrung (1) enthält, die radial von einer Scheitelbewehrung (3) überlagert wird, welche aus mindestens zwei Arbeitsscheitellagen (31, 33), die von metallischen Verstärkungselementen gebildet werden, sich von einer Lage (31) zur nächsten (33) kreuzen, indem sie mit der Umfangsrichtung Winkel zwischen 10 und 35° bilden, und aus mindestens einer zusätzlichen Bewehrung (32) zusammengesetzt ist, die von in Umfangsrichtung ausgerichteten metallischen Verstärkungselementen gebildet wird, **dadurch gekennzeichnet, dass** die zusätzliche Bewehrung (32) von mindestens zwei Schichten (321, 322, 323) von metallischen Elementen mit einem kompaktierten Durchmesser von höchstens gleich 0,6 mm gebildet wird, und dass die metallischen Elemente Zusammenfügungen aus SHT-Stahl des Typs 1 x n sind, wobei n zwischen 2 und 5 liegt, und der Durchmesser der Drähte zwischen 12/100 und 30/100 mm liegt.

2. Reifen nach Anspruch 1, **dadurch gekennzeichnet, dass** die zusätzliche Bewehrung (32) durch Wickeln einer einzigen Lage hergestellt wird, um mindestens zwei Schichten von metallischen Elementen zu bilden.

3. Reifen nach Anspruch 1 oder 2, **dadurch gekennzeichnet, dass** die Scheitelbewehrung Schichten aus Kautschukmischung radial innerhalb und/oder außerhalb der Enden der Schichten von Verstärkungselementen der zusätzlichen Bewehrung gemäß der axialen Breite der Schichten von Verstärkungselementen enthält.

4. Reifen nach einem der Ansprüche 1 bis 3, **dadurch gekennzeichnet, dass** die zusätzliche Bewehrung (32) von Schichten von geteilten metallischen Verstärkungselementen gebildet wird, wobei die Abschnitte oder Einheiten von Abschnitten (eine) Länge(n) geringer als die Umfangslänge einer Schicht haben, und dass die Schnitte zwischen Abschnitten oder Einheiten von Abschnitten in Umfangsrichtung und axial zueinander versetzt sind.

5. Reifen nach einem der Ansprüche 1 bis 3, **dadurch gekennzeichnet, dass** die Länge der Verstärkungselemente der zusätzlichen Bewehrung (32) über eine Umdrehung in der Ebene jeder Schicht um 0 bis 3% größer als die Verlegelänge der Elemente, vorzugsweise um 0 bis 2%, und noch vorzugsweise um 1 bis 1,4% größer ist.

6. Reifen nach Anspruch 5, **dadurch gekennzeichnet, dass** die Verstärkungselemente der zusätzlichen Bewehrung (32) in der Ebene jeder Schicht gewellt sind, wobei die Wellenlänge der Welligkeiten zwischen 20 mm und 100 mm liegt.

7. Reifen nach einem der Ansprüche 1 bis 3, **dadurch gekennzeichnet, dass** die zusätzliche Bewehrung (32) von Schichten von metallischen Verstärkungselementen gebildet wird, die eine Zugspannungskurve abhängig von der relativen Dehnung aufweisen, die geringe Neigungen für die schwachen Dehnungen und eine im Wesentlichen konstante und starke Neigung für die stärkeren Dehnungen hat.

8. Reifen nach einem der vorhergehenden Ansprüche, **dadurch gekennzeichnet, dass** die zusätzliche Bewehrung (32) radial zwischen den zwei Arbeitslagen (31) und (33) positioniert ist.

9. Reifen nach Anspruch 8, **dadurch gekennzeichnet, dass** die Bewehrung (32) eine Dicke von weniger als 2,4 mm aufweist.

10. Reifen nach einem der Ansprüche 1 bis 7, **dadurch gekennzeichnet, dass** die zusätzliche Bewehrung (32) radial über der radial am weitesten außen liegenden Arbeitslage (33) positioniert ist.

## Claims

1. A tyre P comprising a radial carcass reinforcement (1) radially surmounted by a crown reinforcement (3) composed of at least two working crown plies (31, 33) formed of metallic reinforcement elements crossed from one ply (31) to the next (33) and forming with the circumferential direction angles of between 10 and 35°, and by at least one additional reinforcement (32), formed of circumferentially oriented metallic reinforcement elements, **characterised in that** the additional reinforcement (32) is formed of at least two layers (321, 322, 323) of metallic elements of a compacted diameter at most equal to 0.6 mm and **in that** the metallic reinforcements are assemblies of SHT steel of the type 1 x n, n being between 2 and 5, and the diameter of the wires being between 12/100 and 30/100 mm.

2. A tyre according to claim 1, **characterised in that** the additional reinforcement (32) is produced by winding a single ply so as to form at least two layers of metallic elements.

3. A tyre according to claim 1 or 2, **characterised in that** the crown reinforcement comprises layers of rubber mix radially to the inside and/or to the outside of the ends of the layers of reinforcement elements of the additional reinforcement in accordance with the axial width of said layers of reinforcement elements.

4. A tyre according to one of claims 1 to 3, **characterised in that** the additional reinforcement (32) is formed of layers of divided metallic reinforcement elements, the sections or sets of sections being of a smaller length than the circumferential length of a layer, and **in that** the cuts between sections or sets of sections are offset circumferentially and axially relative to one another.

5. A tyre according to one of claims 1 to 3, **characterised in that** the length per turn of the reinforcement elements of the additional reinforcement (32) is, in the plane of each layer, greater by 0 to 3% than the laying length of said elements, preferably greater by 0 to 2% and more preferably greater by 1 to 1.4%.

6. A tyre according to claim 5, **characterised in that** the reinforcement elements of the additional reinforcement (32) undulate in the plane of each layer, the wavelength of the undulations being between 20 and 100 mm.

7. A tyre according to one of claims 1 to 3, **characterised in that** the additional reinforcement (32) is formed of layers of metallic reinforcement elements displaying a tensile stress curve as a function of relative elongation having gentle slopes for gentle elongations and a substantially constant, sharp slope for the greater elongations.

8. A tyre according to one of the preceding claims, **characterised in that** the additional reinforcement (32) is positioned radially between the two working plies (31) and (33).

9. A tyre according to claim 8, **characterised in that** the reinforcement (32) is less than 2.4 mm thick.

10. A tyre according to one of claims 1 to 7, **characterised in that** the additional reinforcement (32) is positioned radially above the radially outermost working ply (33).
